(19) Europäisches Patentamt
European Patent Office
Office européen des brevets

(11) **EP 2 938 576 B1**

(12) **FASCICULE DE BREVET EUROPEEN**

(45) Date de publication et mention de la délivrance du brevet:
**04.09.2019 Bulletin 2019/36**

(21) Numéro de dépôt: **13826880.0**

(22) Date de dépôt: **20.12.2013**

(51) Int Cl.:
*C02F 3/00* *(2006.01)*    *C02F 11/04* *(2006.01)*
*C02F 11/14* *(2019.01)*    *C02F 11/123* *(2019.01)*

(86) Numéro de dépôt international:
**PCT/IB2013/061205**

(87) Numéro de publication internationale:
**WO 2014/102686 (03.07.2014 Gazette 2014/27)**

(54) **INSTALLATION ET PROCEDE DE TRAITEMENT DE BOUES PRIMAIRES D'EAUX USEES MUNICIPALES OU INDUSTRIELLES**

ANLAGE UND VERFAHREN ZUR BEHANDLUNG EINES PRIMÄREN SCHLAMMS AUS STÄDTISCHEM ODER INDUSTRIELLEM ABWASSER

PLANT AND METHOD FOR TREATING PRIMARY SLUDGE FROM MUNICIPAL OR INDUSTRIAL WASTEWATER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.12.2012 FR 1262787**

(43) Date de publication de la demande:
**04.11.2015 Bulletin 2015/45**

(73) Titulaire: **SUEZ International**
**92040 Paris La Défense (FR)**

(72) Inventeur: **DELAHAYE, Mathieu**
**F-78350 Jouy En Josas (FR)**

(74) Mandataire: **IPAZ**
**16, rue Gaillon**
**75002 Paris (FR)**

(56) Documents cités:
**WO-A1-2008/037296    WO-A2-2011/112737**
**WO-A2-2012/145763    FR-A1- 2 940 270**
**US-A- 3 613 564    US-A- 4 341 628**
**US-A1- 2003 111 411    US-A1- 2012 043 277**
**US-B1- 6 296 766**

Printed by Jouve, 75001 PARIS (FR)

**EP 2 938 576 B1**

**Description**

L'invention est relative à un procédé de traitement de boues primaires d'eaux usées municipales ou industrielles du genre de ceux selon lesquels les eaux usées, contenant une charge entrante de matières en suspension (MES), sont soumises à un traitement primaire donnant, d'une part, des boues primaires envoyées dans un digesteur anaérobie pour une production de biogaz et, d'autre part, des eaux usées envoyées vers un autre traitement, généralement un traitement biologique.

La digestion des boues, réalisée dans le digesteur, est une dégradation partielle de la matière organique par voie biologique, résultant d'une succession de réactions, conduisant à la formation d'un mélange gazeux appelé biogaz. Ce biogaz est source d'énergie, qu'il soit valorisé sous forme d'électricité, de chaleur, ou utilisé comme combustible, notamment comme carburant ou par injection comme gaz de ville.

Le traitement primaire des eaux usées, donnant les boues primaires, consiste, le plus souvent, en une séparation physique, notamment décantation, flottation, ou filtration avec addition éventuelle d'un coagulant ou d'un floculant. Avant ce traitement primaire, les eaux usées sont généralement soumises à un prétraitement, en particulier en traversant un dégrilleur, et/ou un dessableur et/ou un déshuileur.

Les boues primaires issues du traitement primaire sont des boues ayant un potentiel de production de biogaz élevé.

Le document WO 2008/037296 décrit un procédé pour évacuer les eaux de traitement chargées de matières solides mettant en oeuvre un pré-épaississeur en amont d'un digesteur qui permet la décantation de matières solides en suspension dans un bassin de sédimentation et l'alimentation dudit digesteur en boues activées.

Deux types de digestion anaérobie sont couramment utilisés dans le domaine du traitement des boues d'eaux usées municipales ou industrielles :

-   la digestion des boues peut être mésophile, pour une température dans le digesteur comprise entre 33° et 37°C et un temps de séjour moyen de 16 à 22 jours ;
-   la digestion des boues peut être thermophile, pour une température comprise entre 55° et 60°C dans le digesteur, et un temps de séjour de 10 à 12 jours.

Le temps de séjour et la température sont deux facteurs essentiels à la bonne dégradation des boues et donc à l'optimisation de la production d'énergie.

Les quantités de boues alimentant un digesteur peuvent varier selon la charge de pollution entrante sur la station d'épuration. Ainsi, la quantité de boues entrant dans le digesteur est variable, ce qui entraîne des variations dans les temps de séjour des boues et donc des variations sur les rendements d'élimination de boues et de production de biogaz.

La digestion permet une diminution du taux de matières volatiles (MV) dans les boues. Le rendement Rdt d'une digestion est calculé par la relation suivante :

$$Rdt = (Flux\ MV_{entrée} - Flux\ MV_{sortie})/Flux\ MV_{entrée}$$

Le rendement indique ainsi la dégradation des matières volatiles dans la digestion. La température et le temps de séjour influent sur le rendement de dégradation des matières volatiles et donc sur la production de biogaz.

Les étapes de digestion sont généralement conçues en prenant en compte la charge moyenne ou maximale de pollution arrivant sur une usine de traitement des eaux. Le volume du ou des digesteur(s) est alors déterminé par le flux de boues à digérer lors des périodes de charge maximale, par exemple pour les deux semaines les plus chargées dans l'année. Ce volume peut donc s'avérer trop important si l'on considère les variations de charge en entrée de station. Il peut y avoir des périodes où la quantité de boues produites est faible, ce qui entraînera également une production faible de biogaz.

La présente invention a pour but surtout d'optimiser le fonctionnement du digesteur afin d'en tirer le maximum d'énergie, et d'optimiser la production de biogaz issu de la digestion dans une usine en fonctionnement.

Pour cela, selon l'invention, on fait varier la performance du traitement primaire pour faire fonctionner le digesteur avec un flux de boues à digérer correspondant sensiblement à la charge optimale pour le digesteur, malgré les variations de charge entrante.

Selon l'invention, le procédé de traitement d'eaux usées municipales ou industrielles, selon lequel les eaux usées, contenant une charge entrante de matières en suspension (MES), sont soumises à un traitement primaire donnant, d'une part, des boues primaires envoyées dans un digesteur anaérobie pour une production de biogaz et, d'autre part, des eaux usées envoyées vers un autre traitement, généralement un traitement biologique, est caractérisé en ce que la charge entrante de matières en suspension est soumise à une étape de traitement primaire assurée par filtration sur un filtre primaire constitué d'un filtre primaire mécanique (13) à bande rotative filtrante (14) et d'un moyen de réglage, ledit moyen de réglage (B, 15) étant prévu pour assurer une modification de la vitesse de rotation de la, ou des, bande(s) filtrante(s),et

- le débit de boues primaires (Qprim) est mesuré en sortie de l'étape de traitement primaire pour déterminer le réglage à adopter pour le traitement primaire,
- des instructions de réglage déterminées des mesures sont transmises au moyen de réglage, qui réduit la vitesse de la ou les bandes en cas de diminution de la charge entrante polluante et augmente la vitesse de la ou les bandes, en cas d'augmentation de la charge entrante polluante,
- ledit procédé permettant d'alimenter le digesteur à sa charge optimale quel que soit les variations de charge entrante de matières en suspension.

La filtration est une filtration sur bande rotative, la vitesse de rotation de cette bande constituant un paramètre de filtration pour le réglage, et on augmente l'efficacité de la filtration par diminution de la vitesse de rotation de la bande, tandis que l'on diminue l'efficacité de la filtration par augmentation de la vitesse de rotation de la bande.

L'augmentation de la production de boues primaires, lors du traitement primaire, peut être limitée afin de ne pas diminuer le temps de séjour dans le digesteur au-dessous d'une valeur critique.

Dans le cas d'une digestion mésophile, l'augmentation de production de boues primaires peut être limitée afin de ne pas diminuer le temps de séjour dans le digesteur au-dessous de 16 jours.

L'invention consiste également en une installation pour la mise en oeuvre du procédé de traitement défini précédemment, selon laquelle le dispositif de traitement primaire comporte un moyen de réglage permettant de modifier la production de boues primaires.

Selon l'invention, une Installation de traitement d'eaux usées municipales ou industrielles, pour la mise en oeuvre du procédé de traitement défini précédemment, laquelle installation comporte une unité de traitement primaire qui fournit, sur une sortie des boues primaires dirigées vers un digesteur anaérobie, les eaux usées contenant une charge entrante de matières en suspension (MES), est caractérisée en ce que l'unité de traitement primaire est constituée d'un filtre primaire avec moyen de réglage, constitué d'un filtre primaire mécanique à bande rotative filtrante entraîné par un moteur à vitesse réglable en tant que moyen de réglage prévu pour assurer une modification de la vitesse de rotation de la, ou des, bande(s) filtrante(s), et en ce qu'elle comporte un dispositif de mesure du débit des boues primaires (Qprim) prévu sur la conduite d'alimentation du digesteur, et une liaison prévue entre le dispositif de mesure et le moyen de réglage du traitement primaire, pour la transmission d'instructions de réglage de la production de boues provenant du dispositif de mesure, le dispositif de mesure du débit de boues primaires étant associé à une sonde de mesure de la concentration en MES des boues primaires.

Le filtre primaire est constitué d'un filtre primaire mécanique à bande rotative, le moyen de réglage étant prévu pour assurer une modification de la vitesse de rotation de la, ou des, bande(s) filtrante (s).

L'installation comporte un dispositif de mesure du débit des boues primaires prévu sur une conduite d'alimentation du digesteur, et une liaison prévue entre le dispositif de mesure et le moyen de réglage du traitement primaire, pour la transmission d'instructions de réglage de la production de boues provenant du dispositif de mesure, et pour assurer une alimentation optimale du digesteur. Le dispositif de mesure du débit de boues primaires est associé à une sonde de mesure de la concentration en MES des boues primaires.

L'installation peut comporter une conduite entre une unité de traitement secondaire et le digesteur pour alimenter le digesteur en boues secondaires, cette conduite étant équipée, de préférence, d'un débitmètre, la régulation du digesteur prenant en compte cet apport de boues secondaires.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :

Fig. 1 est un schéma d'une installation de traitement d'eaux usées avec traitement primaire et digesteur selon l'invention.

Fig. 2 est un graphique illustrant, pour une digestion mésophile, la variation de réduction en matières volatiles exprimée en pourcents, portée en ordonnée, en fonction du temps de séjour porté en abscisse, les différentes courbes correspondant à des boues dont les teneurs en matières volatiles sont indiquées sur les courbes et varient de 60 % à 85 %.

Fig. 3 est un graphique représentant le débit maximal de boues primaires admissible, porté en ordonnée et exprimé en pourcents du débit de dimensionnement d'un digesteur, en fonction du temps porté en abscisse.

Fig. 4 est un schéma de fonctionnement de l'installation.

Fig.5 est une coupe verticale schématique d'un filtre mécanique à bande rotative constituant l'unité de traitement primaire.

Fig. 6 est un graphique représentant une variation de la charge entrante exprimée en kgMES/h, portée en ordonnée, en fonction du temps porté en abscisse.

Fig. 7 est un tableau illustrant les résultats obtenus par un traitement traditionnel d'eaux usées selon la charge entrante de Fig. 6, et

Fig. 8 est un tableau, semblable à celui de Fig. 7, illustrant les résultats obtenus avec un procédé conforme à l'invention pour des eaux usées selon la charge entrante de Fig. 6.

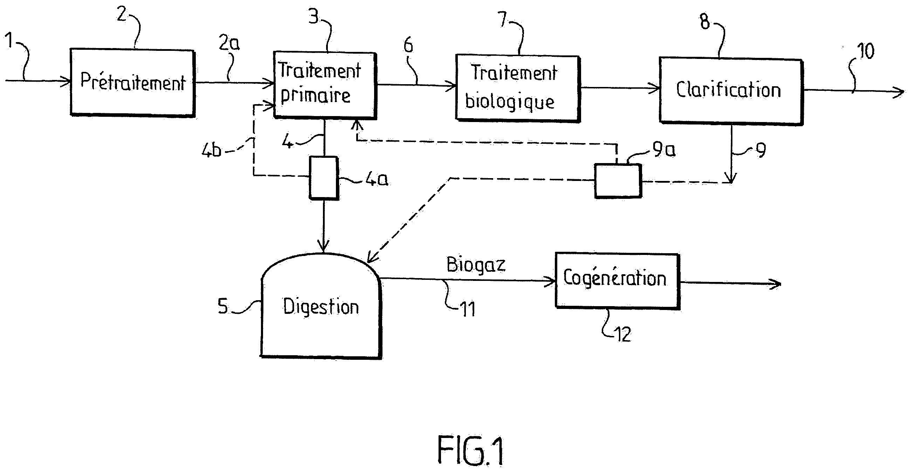

En se reportant à Fig. 1 des dessins, on peut voir le schéma d'une installation ou usine de traitement d'eaux usées municipales ou industrielles qui arrivent par une conduite 1 dans une unité de prétraitement 2 comportant notamment un dégrilleur, et/ou un dessableur et/ou un déshuileur.

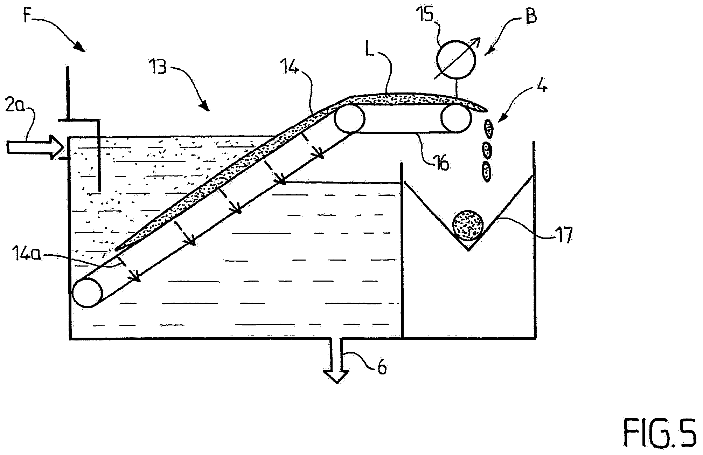

L'effluent prétraité est ensuite envoyé, par une conduite 2a, dans une unité 3 de traitement primaire qui comporte un dispositif de filtration F, en particulier sur bande, illustré sur Fig.5.

Les eaux usées arrivant par la conduite 1 contiennent une charge de matières en suspension, ou MES, constituant la charge de pollution entrante dans l'installation de traitement.

Le traitement primaire 3 fournit, sur une sortie 4, des boues primaires qui sont dirigées vers un digesteur 5.

L'eau usée traitée sort par une conduite 6 et est dirigée vers un autre traitement, notamment un traitement biologique 7. L'eau issue de ce traitement biologique est envoyée dans une unité de clarification 8 qui, sur une sortie 9, donne des boues biologiques envoyées, en partie ou en totalité, au digesteur 5. Une autre sortie 10 est prévue pour l'eau clarifiée qui, après un traitement éventuel complémentaire, peut être renvoyée au milieu naturel.

Le digesteur 5 produit du biogaz qui est évacué en partie supérieure par une conduite 11 afin d'être exploité, notamment dans une unité 12 de cogénération avec production d'énergie.

Le digesteur 5 fonctionne habituellement en étant complètement rempli de sorte que le débit de matières entrant dans le digesteur est égal, en moyenne, au débit de matières sortant du digesteur. Le débit de sortie d'un digesteur est obtenu classiquement par débordement du contenu du digesteur au-dessus d'un niveau de déversement. Le contenu du digesteur est considéré comme infiniment mélangé.

Le volume du digesteur 5 est généralement déterminé par le flux de boues à digérer lors des périodes de charge maximale. En raison des variations de charge entrante de l'usine selon les périodes de l'année, selon le mode traditionnel de fonctionnement, le rendement de la digestion ne sera pas optimal pour les périodes où la charge entrante sera faible par rapport à celle prise en compte pour le dimensionnement du digesteur. Si l'installation reçoit des eaux usées avec une charge entrante maximale, la digestion fonctionnera à son maximum. Par contre, si la charge entrante des eaux usées est faible, la digestion sera peu chargée et le temps de séjour dans le digesteur s'allongera car, généralement, le volume de digestion est fixe.

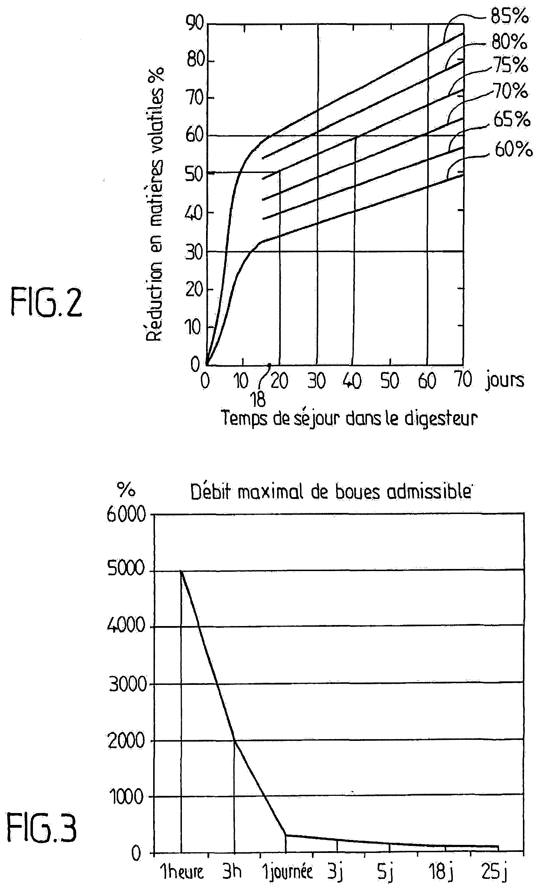

Or, le graphique de Fig. 2 fait apparaître, dans le cas d'une digestion mésophile, que le temps de séjour, porté en abscisse, pour une même qualité de boues, exprimé en pourcents de matières volatiles et mentionné au-dessus des courbes, a moins d'influence sur le rendement d'élimination des matières volatiles au-delà d'un temps de séjour de l'ordre de 18 jours, que pour un temps de séjour inférieur à 18 jours.

Ainsi, pour une boue à 75 % de matières volatiles, passer de 20 jours à 40 jours de séjour dans le digesteur ne fait augmenter le rendement d'élimination des matières volatiles que d'environ 50 à 60 % de réduction des matières volatiles (soit une augmentation d'environ 20% rapportée à 50%).

Il y a donc intérêt à introduire davantage de boues dans le digesteur, lors d'une période peu chargée, pour conserver un temps de séjour raisonnable, qui n'a pas trop augmenté, plutôt que d'introduire une quantité de boues réduite qui restera plus longtemps dans le digesteur 5.

A titre d'exemple, selon le graphique de Fig. 2, 100 kgMES/j (100 kg de matières en suspension par jour) à 75 % de MV (matières volatiles) laissés pendant 40 jours dans le digesteur entraînent une production (élimination) de 60 % de MV. A raison de 1 Nm$^3$ (mètre cube normal) de biogaz par kilogramme de MV éliminé, et de 6,4 kWh/Nm$^3$ de biogaz, la production d'énergie par jour sera de :

$$100 \text{ kgMES/j} \times 75\% \times 60\% \times 1 \text{ Nm}^3 / \text{kgMV} \times 6,4 \text{ kWh/Nm}^3 = 288 \text{ kWh/j}.$$

Par contre, si l'on double la production de boues primaires pour passer à 200 kgMES/j, en divisant par deux le temps de séjour qui devient 20 jours au lieu de 40, le taux d'élimination de MV devient sensiblement égal à 50 % selon Fig. 2 et la production d'énergie devient :

$$200 \text{ kgMES/j} \times 75\% \times 50\% \times 1 \text{ Nm}^3 / \text{kgMV} \times 6,4 \text{ kWh/Nm}^3 = 480 \text{ kWh/j}.$$

Le gain énergétique dans ce cas est de : (480 - 288)/288 = 66,7 %.

Selon l'invention, la production de boues primaires, assurée par l'unité de traitement primaire 3, est augmentée lorsque la charge entrante de MES (matières en suspension) dans l'unité de traitement primaire 3 est plus faible, afin d'utiliser à plein le potentiel de digestion, lié au volume disponible du digesteur 5. Lorsque la charge entrante de MES est forte, la production de boues primaires sera réduite si nécessaire.

L'augmentation de production de boues primaires est cependant limitée afin de ne pas trop diminuer le temps de séjour dans le digesteur 5. En effet, comme le montre le graphique de Fig. 2, pour une teneur déterminée en MV, dans le cas d'une digestion mésophile, les rendements d'élimination des boues, et donc de production de biogaz, ont tendance à baisser fortement pour un temps de séjour inférieur à 18 jours.

Un dispositif 4a de mesure et de limitation du débit des boues primaires envoyées au digesteur 5 est prévu sur la conduite 4. Le dispositif de mesure 4a est avantageusement associé à une sonde de mesure de la concentration en MES, ce qui permet de calculer ainsi réellement le flux entrant de MES et d'effectuer une régulation plus fine.

Les périodes pour lesquelles les variations du flux de matières organiques, de matières en suspension ou de débit, sont prises en compte à l'entrée de l'installation peuvent avoir des durées différentes. En particulier, l'invention prévoit de faire varier le débit de production de boues primaires au cours d'une journée. Dans une journée, il peut y avoir de fortes variations de flux de matières organiques, de matières en suspension ou de débit entraînant de fortes variations de la charge entrante en MES. Dans tous ces cas, l'invention permet d'optimiser le flux de boues primaires envoyées dans le digesteur 5.

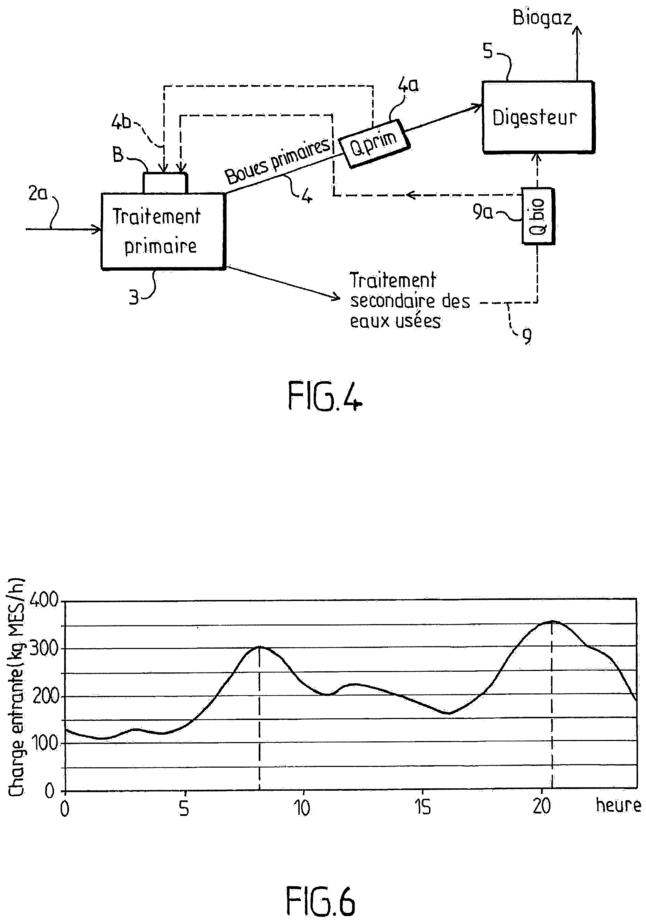

Le schéma de Fig. 4 illustre le fonctionnement de l'asservissement du traitement primaire 3 selon le procédé de l'invention.

La mesure du débit Qprim de boues primaires dirigées vers le digesteur 5, ou la totalisation du volume de boues primaires, est effectuée sur plusieurs périodes glissantes par le dispositif de mesure 4a afin de déterminer le réglage à adopter pour le traitement primaire 3. Les instructions de réglage proviennent du dispositif de mesure 4a et sont transmises par la liaison 4b à un moyen de réglage B du traitement primaire 3. Le réglage vise à augmenter ou à diminuer la production de boues primaires, et donc le taux d'élimination des matières en suspension, pour assurer une alimentation optimale du digesteur 5.

Lorsque des boues secondaires issues d'un traitement secondaire, notamment traitement biologique 7, sont dirigées également vers le digesteur par une conduite 9, cette conduite est équipée, de préférence, d'un débitmètre 9a, éventuellement associé à une mesure de la concentration en MES. Les informations du débitmètre 9a, notamment le débit mesuré Qbio de boues secondaires, sont transmises par une liaison au moyen de réglage B. La régulation du digesteur 5 prend ainsi en compte cet apport de boues secondaires.

La filtration peut être réalisée sous pression auquel cas le moyen de réglage B est propre à agir sur la pression de filtration. Lorsque la charge entrante de matières en suspension MES est faible, la pression de filtration est réduite de manière à augmenter le temps de passage à travers le filtre et à augmenter la production de boues primaires, tandis que lorsque la charge entrante en MES est plus forte, la pression de filtration est augmentée pour réduire la production de boues primaires.

Dans le cas de la pression, on peut dire que plus la pression diminue, plus la couche de boues primaires augmente sur la bande, plus le rendement de captage de MES augmente (filtration sur gâteau ; cake filtration).

Avantageusement, la filtration est réalisée à l'aide d'un filtre primaire mécanique 13 (Fig.5) à bande 14 rotative filtrante entraînée par un moteur 15 à vitesse réglable pour ajuster la vitesse de la bande et optimiser la charge du digesteur. La bande 14 est constituée d'une bande sans fin passant autour d'un rouleau inférieur situé dans le liquide d'un bassin, en partie basse, et d'un rouleau supérieur d'extrémité, hors du bassin, entraîné par le moteur 15, et assurant le déplacement de la bande. Le moteur 15 constitue le moyen de réglage B dans l'exemple considéré. L'action de régulation est assurée par une modification de la vitesse de rotation de la bande filtrante 14, ou des bandes filtrantes lorsqu'il y en a plusieurs.

Dans le cas d'une diminution de la charge entrante polluante, la vitesse de la bande 14 sera réduite, tandis que dans le cas d'une augmentation de la charge entrante polluante, la vitesse de la bande sera augmentée.

En fait, plus la vitesse de la bande diminue, plus la couche de boues primaires augmente sur la bande, plus le rendement de captage de MES augmente (filtration sur gâteau ; cake filtration).

Donc, dans le cas de charge polluante plus faible, on réduit la vitesse de la bande pour augmenter le rendement de captage de MES, et à l'inverse dans le cas de charge polluante plus importante, on augmente la vitesse de la bande pour réduire le rendement de captage de MES, de telle sorte que le digesteur soit alimenté à une valeur proche de sa charge nominale sur une durée donnée, par exemple 24h.

Comme visible sur Fig.5, l'eau prétraitée arrive par la conduite 2a en partie haute du bassin séparé en deux zones par la bande filtrante 14 disposée, avec sa structure porteuse 14a, selon un plan incliné. L'extrémité supérieure de la bande, située hors du bassin, se raccorde à un convoyeur horizontal 16 qui verse la boue primaire dans une rigole 17, d'où elle est évacuée. L'eau à traiter se trouve dans la zone du bassin située au-dessus de la bande 14, à gauche selon Fig.5, tandis que l'eau filtrée primaire se trouve dans la zone située au-dessous de la bande 14, à droite, et est

EP 2 938 576 B1

évacuée par la conduite 6. La couche L de gâteau de boue primaire se trouve sur la bande 14 et est évacuée par la sortie 4, pour tomber dans la rigole 17.

Avec le filtre primaire mécanique à bande 13, l'action de régulation peut être assurée par une modification de la vitesse de rotation de la, ou des, bande(s) filtrante (s) 14. Une réduction du débit hydraulique entrant, et donc une diminution de la charge entrante, pour une concentration en matières en suspension constante par exemple, va engendrer une augmentation du rendement d'élimination de matières en suspension, notamment par réduction de la vitesse de rotation de la bande filtrante entraînant l'épaississement du gâteau filtrant et donc l'augmentation du rendement de filtration. Ainsi, davantage de boues primaires seront produites, et le débit entrant dans le digesteur 5 sera plus important.

Le temps de séjour des boues risque également de diminuer, auquel cas le rendement de production de biogaz pourrait également diminuer. Il est donc prévu de réguler le taux d'élimination dans le traitement primaire 3 par la mesure de la disponibilité du digesteur 5, c'est-à-dire de la quantité de boues que peut accepter le digesteur 5 tout en conservant un temps de séjour des boues qui garantit une dégradation performante des matières organiques et donc un rendement de production de biogaz optimal.

La régulation permet ainsi d'augmenter autant que possible la production des boues primaires, sous réserve que cette augmentation soit acceptable par le digesteur 5 et n'entraîne pas de dégradation de ses performances en réduisant par trop le temps de séjour.

Il est avantageux, sur de courtes périodes de quelques heures, d'accepter un maximum de boues primaires dans le digesteur 5, notamment lors des pointes de charge entrante organique, afin de soulager le traitement biologique 7, et de produire un maximum de biogaz et donc d'énergie sur le site. Un débit maximal, à ne pas dépasser, est alors défini pour ne pas impacter les performances du digesteur 5. Fig. 3 est un exemple de table de régulation du débit maximal de boues primaires admissible dans le digesteur 5 exprimé en pourcents du débit de dimensionnement du digesteur 5, et porté en ordonnée, en fonction du temps pendant lequel ce débit est maintenu, porté en abscisse.

Selon la table de Fig. 3, le digesteur peut accepter pendant une heure un débit de 5000 % du débit nominal de dimensionnement du digesteur sans toutefois que, sur une période glissante de 3 heures, ce débit ne dépasse 2000 % du débit nominal de dimensionnement du digesteur.

Si le digesteur est dimensionné pour traiter 10 000 kg de MES en 18 jours, le digesteur ne pourra recevoir :

- en 1 heure plus de : 5000 % (10 000 kg /18x24) soit 1157 kg MES,
- ou en 3 heures plus de: 2000 %.(10 000 kg/18x24) soit 1388 kg MES.

Les figures 6 à 8 permettent de concrétiser les avantages procurés par le procédé de l'invention à l'aide d'un exemple de simulation de traitement d'eaux usées mettant en oeuvre le procédé.

Fig. 6 est un diagramme illustrant le profil de la charge entrante en MES pendant une journée dans l'installation de traitement. Les charges entrantes exprimées en kgMES/h sont portées en ordonnée, tandis que le temps exprimé en heures est porté en abscisse. Ce profil débute à l'instant zéro par une charge en MES de l'ordre de 130 kgMES/h, passe par un premier maximum après environ 8 h pour une charge d'environ 300 kgMES/h, puis diminue pour remonter et passer par un autre maximum vers 20 h 30 avec une charge entrante d'environ 350 kgMES/h. On considère, pour cet exemple, que la digestion est du type mésophile et que le temps de séjour des boues dans le digesteur reste constant, égal à 18 jours, et permet une dégradation de 50 % des matières volatiles MV.

L'hypothèse formulée est celle d'une usine ou installation dimensionnée pour traiter 5500 kgMES/j.

L'unité de traitement primaire 3 est dimensionnée pour traiter 50 % de la pollution entrante exprimée en MES, soit 5500 x 0,5 = 2750 kgMES/j.

En considérant que les boues primaires entrantes contiennent 50 g/L de MES, le digesteur 5 est dimensionné sur la base de 2750 kgMES/j x 18 j (jours)/50 g/L de MES = 990 m$^3$.

Le traitement primaire est dimensionné pour accepter une pointe de 1666 m$^3$/h, ce qui correspond à 500 kgMES/h à 300 mgMES/L.

La charge entrante dans l'installation, pour la journée considérée de Fig. 6, est représentée par l'aire comprise entre le profil et l'axe des abscisses et correspond à 5280 kgMES.

L'invention permet de réguler la performance du traitement primaire en fonction de la capacité du digesteur. Dans le cas présent, comme le digesteur n'est pas chargé, le procédé de l'invention va imposer un débit maximal de boues primaires égal à 300% du débit de dimensionnement du digesteur, selon la table de Fig.3, soit : 3x990/18 = 165 m$^3$/j.

Le rendement du traitement primaire, c'est-à-dire le taux d'abattement en MV dû au traitement primaire, dépend du débit d'eaux usées à traiter et augmente lorsque le débit diminue. Pour l'exemple étudié, il a été considéré qu'en fonction du débit, le rendement du primaire exprimé en pourcents variait comme indiqué ci-après dans le Tableau 1.

Tableau 1

| % du débit de dimensionnement du traitement primaire | Rendement du primaire |
|---|---|
| 50 à 100% | 50 % |
| 30 à 50 % | 60 % |
| 25 à 30 % | 70 % |
| 20 à 30 % | 75 % |

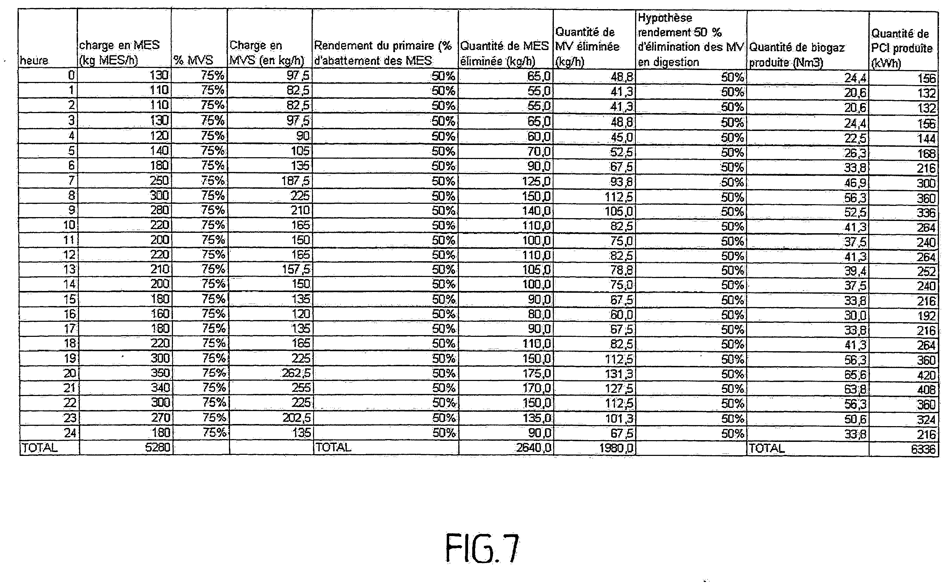

Fig. 7 est un tableau illustrant les résultats obtenus avec un traitement primaire classique selon lequel le rendement du primaire pour l'abattement des MES reste constant à 50 %, comme indiqué dans la cinquième colonne, en partant de la gauche.

Sur cette Fig.7, chaque ligne correspond à une heure indiquée dans la colonne de gauche. La deuxième colonne correspond à la charge en MES pour l'heure considérée, selon le profil de Fig. 6. La troisième colonne rappelle la teneur en matières volatiles MVS de la charge en MES. La quatrième colonne donne la charge en MVS, en kg/h. La cinquième colonne donne le taux d'abattement des MES par le traitement primaire.

La sixième colonne donne la quantité de MES éliminée et correspond au produit de la deuxième colonne par la cinquième colonne. La septième colonne donne la quantité de matière volatile MV, en kg/h éliminée et envoyée en digestion.

La huitième colonne donne le rendement d'élimination des MV en digestion, ce rendement étant supposé égal à 50 %.

La neuvième colonne donne la quantité de biogaz produit exprimée en $Nm^3$ et la dixième colonne donne la quantité de PCI (Pouvoir Calorifique Inférieur) produite, exprimée en kWh.

Le total de la quantité de MV éliminée apparaît égal à 1980 kg, tandis que la quantité de PCI produite apparaît égale à 6336 kWh.

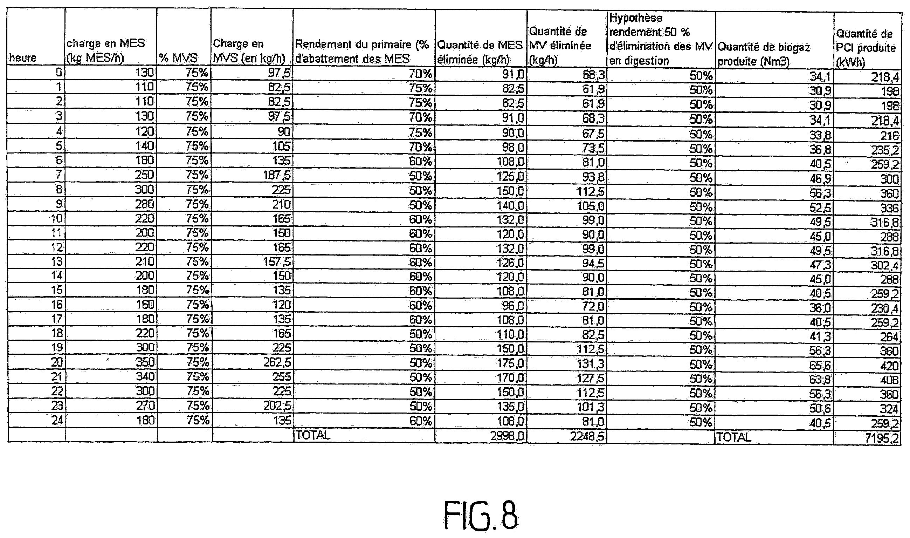

Fig. 8 présente les résultats obtenus avec le procédé de l'invention selon lequel le traitement primaire est modifié, par le moyen de réglage B, d'après la charge en MES qui varie suivant le profil de Fig. 6. On retrouve les dix colonnes de Fig. 7 et les vingt quatre lignes correspondant aux différentes heures.

Au début, à l'heure 0, la charge en MES est de 130 kgMES/h alors que le traitement primaire 3 est dimensionné pour une pointe de 500 kgMES/h. La charge en MES pour l'heure 0, exprimée en pourcents du traitement ayant servi au dimensionnement, est de : 130/500 = 0,26, soit 26 % de la charge prise en compte pour le dimensionnement. Selon le Tableau 1 précédent, le rendement du traitement primaire, en pourcents d'abattement des MES, sera de 70 %. Cette valeur a été portée dans la cinquième colonne, ligne 0.

Un même raisonnement donnera le rendement du traitement primaire pour les heures successives. Pour l'heure 1, la charge en MES est de 110 kgMES/h, soit 22 % des 500 kg MES/h prévus pour l'unité. Cette proportion de 22 % correspond, selon le Tableau 1 précédent, à un rendement de 75 %.

Pour l'heure 10, où la charge en MES est de 220 kgMES/h (soit 44% de 500 kgMES/h), le rendement du primaire sera porté à 60 % selon le Tableau 1 précédent.

Il est ainsi possible pour chaque heure de traitement d'introduire un taux de rendement du primaire adapté à la charge entrante.

La quantité de MV éliminée par le traitement primaire et envoyée à la digestion est mentionnée dans la septième colonne et correspond au produit des quatrième et cinquième colonnes. La quantité de biogaz produite et la quantité de PCI produite sont données respectivement dans la neuvième et la dixième colonnes.

Au total, la quantité de MV éliminée s'élève à 2248,5 kg, tandis que la quantité de PCI produite s'élève à 7195,2 kWh, au lieu de 6336 kWh selon le traitement conventionnel.

Le gain d'énergie, apporté par le procédé de l'invention, est de l'ordre de 13,6 %.

La quantité de boues injectée dans le digesteur 5, selon la Fig.8, optimisée par la présente régulation est supérieure à la charge dimensionnante du digesteur, à savoir 2998 kgMES/j contre 2750 kgMES/j. La régulation prendra ce chiffre en compte afin de ne pas dépasser les consignes de fonctionnement (temps de séjour limité lié à la table de flux de Fig.3) pour les jours suivants.

Le rythme d'alimentation, envisagé pour la première journée, ne pourra pas être maintenu tout au long des 18 jours. La régulation permettra le contrôle du débit d'alimentation du digesteur afin de maintenir sa performance.

Le procédé de l'invention s'applique aussi bien à une digestion mésophile qu'à une digestion thermophile.

Une période glissante dans le temps prend en compte ce qui s'est passé avant l'instant considéré avec prévisions possibles.

Dans le cas de traitements d'eaux usées municipales pour des stations balnéaires, lors des périodes estivales, on peut prévoir la surcharge entrante pour les fins de semaine.

L'invention permet d'éviter de construire des stations de traitement surdimensionnées, prévues pour assurer le traitement convenable lors de fortes charges entrantes qui n'ont lieu que quelques jours par année.

L'invention permet de soulager le traitement secondaire, notamment le traitement biologique, en envoyant davantage de pollution dans le digesteur 5.

L'invention est définie par les revendications annexées.

## Revendications

1. Installation de traitement d'eaux usées municipales ou industrielles, laquelle installation comporte :

   une unité (3) de traitement primaire qui fournit, sur la sortie (4) des boues primaires dirigées vers un digesteur (5) anaérobie, les eaux usées contenant une charge entrante de matières en suspension (MES), **caractérisée en ce que** l'unité de traitement primaire (3) est constituée d'un filtre primaire avec moyen de réglage constitué d'un filtre primaire mécanique (13) à bande rotative filtrante (14) entraîné par un moteur (15) à vitesse réglable en tant que moyen de réglage (B, 15) prévu pour assurer une modification de la vitesse de rotation de la, ou des, bande(s) filtrante(s), et
   **en ce qu'**elle comporte un dispositif (4a) de mesure du débit des boues primaires (Qprim) prévu sur la conduite (4) d'alimentation du digesteur (5), et une liaison (4b) prévue entre le dispositif de mesure (4a) et le moyen de réglage (B) du traitement primaire (3), pour la transmission d'instructions de réglage de la production de boues provenant du dispositif de mesure (4a),
   le dispositif (4a) de mesure du débit de boues primaires étant associé à une sonde de mesure de la concentration en MES des boues primaires.

2. Installation selon la revendication 1, **caractérisée en ce qu'**elle comporte une conduite (9) entre une unité de traitement secondaire et le digesteur (5) pour alimenter le digesteur en boues secondaires, cette conduite (9) étant équipée, de préférence, d'un débitmètre (9a), la régulation du digesteur (5) prenant en compte cet apport de boues secondaires.

3. Procédé de traitement d'eaux usées municipales ou industrielles dans une installation selon l'une des revendications 1 et 2, selon lequel les eaux usées, contenant une charge entrante de matières en suspension (MES), sont soumises à un traitement primaire (3) donnant, d'une part, des boues primaires envoyées dans un digesteur (5) anaérobie pour une production de biogaz et, d'autre part, des eaux usées envoyées vers un autre traitement (7), **caractérisé en ce que** :

   - la charge entrante de matières en suspension est soumise à une étape de traitement primaire assurée par filtration sur un filtre primaire constitué d'un filtre primaire mécanique (13) à bande rotative filtrante (14) et d'un moyen de réglage, ledit moyen de réglage (B, 15) étant prévu pour assurer une modification de la vitesse de rotation de la, ou des, bande(s) filtrante(s),et
   - le débit de boues primaires (Qprim) est mesuré en sortie de l'étape de traitement primaire pour déterminer le réglage à adopter pour le traitement primaire,
   - des instructions de réglage déterminées des mesures sont transmises au moyen de réglage, qui réduit la vitesse de la ou les bandes en cas de diminution de la charge entrante polluante et augmente la vitesse de la ou les bandes, en cas d'augmentation de la charge entrante polluante,
   - ledit procédé permettant d'alimenter le digesteur à sa charge optimale quel que soit les variations de charge entrante de matières en suspension.

4. Procédé selon la revendication 3, **caractérisé en ce que** le temps de séjour dans le digesteur (5) n'est pas diminué en-dessous d'une valeur critique pour limiter la production de boues primaires lors du traitement primaire.

5. Procédé selon la revendication 4, **caractérisé en ce que** la durée de séjour dans le digesteur (5) n'est pas inférieure à 16 jours dans le cas d'une digestion mésophile.

## Patentansprüche

1. Anlage zur Behandlung von städtischem oder industriellem Abwasser, wobei die Anlage folgendes umfasst:

eine Einheit zur Primärbehandlung (3), die am Ausgang (4) primären Schlamm liefert, der zu einem anaeroben Faulbehälter (5) geleitetet wird, wobei das Abwasser eine eingehende Schwebstoff-Beladung (SS) enthält, **dadurch gekennzeichnet, dass** die Einheit zur Primärbehandlung (3) aus einem Primäfilter mit einem Einstellmittel besteht, das

aus einem mechanischen Primärfilter (13) mit einem umlaufenden Filterband (14) besteht, das von einem drehzahlstellbaren Motor (15) als Einstellmittel (B, 15) angetrieben wird, welcher zur Sicherstellung der Änderung der Drehgeschwindigkeit des Filterbands oder der Filterbänder vorgesehen ist, und

dass sie in der Zuführleitung (4) des Faulbehälters (5) eine Meßvorrichtung (4a) für den Primärschlammdurchfluß (Qprim) umfasst,

sowie eine zwischen der Meßvorrichtung (4a) und dem Einstellmittel (B) der Primärbehandlung (3) vorgesehene Verbindung (4b) zur Übertragung von Einstellanweisungen der Meßvorrichtung (4a) für die Schlammerzeugung, wobei die Meßvorrichtung (4a) für den primären Schlammdurchfluß einer Messsonde zur Messung der SS-Konzentration des Primärschlamms zugeordnet ist.

2.  Anlage gemäß Anspruch 1, **dadurch gekennzeichnet, dass** sie eine Leitung (9) zwischen einer Einheit zur Sekundärbehandlung und dem Faulbehälter (5) umfasst, um den Faulbehälter mit Sekundärschlamm zu speisen, wobei diese Leitung (9) vorzugsweise mit einem Durchflussmesser (9a) ausgestattet ist, wobei diese Einspeisung von Sekundärschlamm bei der Einstellung des Faulbehälters (5) berücksichtigt wird.

3.  Verfahren zur Behandlung von städtischem oder industriellem Abwasser in einer Anlage gemäß einem der Ansprüche 1 und 2, wobei das eine eingehende Schwebstoff-Beladung (SS) enthaltene Abwasser einer Primärbehandlung (3) unterzogen wird, bei der einerseits Primärschlamm erzeugt wird, der in einen anaeroben Faulbehälter (5) zur Erzeugung von Biogas eingespeist wird, und andererseits das Abwasser einer anderen Behandlung (7) zugeführt wird, **dadurch gekennzeichnet, dass**

    - die eingehende Schwebstoff-Beladung einer Primärbehandlung durch Fitration auf einem Primäfilter aus einem mechanischen Primärfilter (13) mit einem umlaufenden Filterband (14) und einem Einstellmitttel unterzogen wird, wobei das Einstellmittel (B, 15) zur Sicherstellung der Änderung der Drehgeschwindigkeit des Filterbands oder der Filterbänder vorgesehen ist, und
    - der Primärschlammdurchfluß (Qprim) am Ausgang des Primärbehandlungsschritts gemessen wird, um die für die Primärbehandlung anzuwendende Einstellung zu bestimmen,
    - die anhand der Messungen bestimmten Einstellanweisungen an das Einstellmittel übertragen werden, das die Geschwindigkeit des Bandes oder der Bänder im Fall einer Senkung der eintretenden Schadstoffbeladung reduziert und die Geschwindigkeit des Bandes oder der Bänder im Fall einer Steigerung der eintretenden Schadstoffbeladung erhöht,
    - wobei das Verfahren die Versorgung des Faulbehälters mit seiner optimalen Beladung unabhängig von den Schwankungen der eingehenden Schwebstoff-Beladung ermöglicht.

4.  Verfahren gemäß Anspruch 3, **dadurch gekennzeichnet, dass** die Verweilzeit in dem Faulbehälter (5) nicht unter einen kritischen Wert gesenkt wird, um die Erzeugung von Primärschlamm bei der Primärbehandlung zu beschränken.

5.  Verfahren gemäß Anspruch 4, **dadurch gekennzeichnet, dass** die Verweilzeit in dem Faulbehälter (5) im Fall einer mesophilen Faulung nicht weniger als 16 Tage beträgt.

**Claims**

1.  A municipal or industrial waste water treatment facility, which facility includes:

    a primary treatment unit (3) which provides, on the outlet (4), primary sludge directed to an anaerobic digester (5), the waste water containing a suspended solids (SS) inflow,
    **characterised in that** the primary treatment unit (3) consists of a primary filter with an adjusting means consisting of a mechanical primary filter (13) with a rotary filter belt (14) driven by an adjustable speed motor (15) as an adjusting means (B, 15) provided to ensure a modification of the rotation speed of the filtering belt(s), and
    **in that** it includes a device (4a) for measuring the flow rate of the primary sludge (Qprim), provided on the duct (4) for supplying the digester (5),

and a connection (4b) provided between the measuring device (4a) and the adjusting means (B) of the primary treatment (3), for transmitting instructions for adjusting the production of sludge from the measuring device (4a), the device (4a) for measuring the primary sludge flow rate being associated with a probe for measuring the concentration of SS of the primary sludge.

2. The facility according to claim 1, **characterised in that** it includes a duct (9) between a secondary treatment unit and the digester (5) to supply the digester with secondary sludge, this duct (9) being equipped, preferably, with a flow rate meter (9a), the regulation of the digester (5) taking this secondary sludge feed into account.

3. A municipal or industrial waste water treatment method in an equipment according to one of claims 1 and 2, wherein waste water, containing a suspended solids (SS) inflow, is subjected to a primary treatment unit (3) yielding, on the one hand, primary sludge sent to an anaerobic digester (5) for a biogas production and, on the other hand, waste water sent to another treatment (7),
**characterised in that**:

- the suspended solids inflow is subjected to a primary treatment step ensured by a filtration on a primary filter consisting of a mechanical primary filter (13) with a rotary filter belt (14) and an adjusting means, said adjusting means (B, 15) being provided to ensure a modification of the rotation speed of the filter belt(s), and
- the primary sludge flow rate (Qprim) is measured at the outlet of the primary treatment step to determine the adjustment to assume for the primary treatment,
- determined adjusting instructions for the measurements are transmitted to the adjusting means, which reduces the speed of the belt (s) in case of a decrease of the pollutant inflow and increases the speed of the belt(s), in case of an increase in the pollutant inflow,
- said method enabling the digester to be supplied at its optimum load regardless of the variations in the suspended solids inflow.

4. The method according to claim 3, **characterised in that** the residence time in the digester (5) is not decreased below a critical value to limit primary sludge production during the primary treatment.

5. The method according to claim 4, **characterised in that** the residence duration in the digester (5) is not lower than 16 days in the case of a mesophilic digestion.

Prétraitement — Traitement primaire — Traitement biologique — Clarification

Digestion — Cogénération

Biogaz

1, 2, 2a, 3, 4, 4a, 4b, 5, 6, 7, 8, 9, 9a, 10, 11, 12

FIG.1

FIG.2

FIG.3

EP 2 938 576 B1

FIG.4

FIG.6

13

FIG.5

| heure | charge en MES (kg MES/h) | % MVS | Charge en MVS (en kg/h) | Rendement du primaire (% d'abattement des MES) | Quantité de MES éliminée (kg/h) | Quantité de MV éliminée (kg/h) | Hypothèse rendement 50 % d'élimination des MV en digestion | Quantité de biogaz produite (Nm3) | Quantité de PCI produite (kWh) |
|---|---|---|---|---|---|---|---|---|---|
| 0 | 130 | 75% | 97,5 | 50% | 65,0 | 48,8 | 50% | 24,4 | 156 |
| 1 | 110 | 75% | 82,5 | 50% | 55,0 | 41,3 | 50% | 20,6 | 132 |
| 2 | 110 | 75% | 82,5 | 50% | 55,0 | 41,3 | 50% | 20,6 | 132 |
| 3 | 130 | 75% | 97,5 | 50% | 65,0 | 48,8 | 50% | 24,4 | 156 |
| 4 | 120 | 75% | 90 | 50% | 60,0 | 45,0 | 50% | 22,5 | 144 |
| 5 | 140 | 75% | 105 | 50% | 70,0 | 52,5 | 50% | 26,3 | 168 |
| 6 | 180 | 75% | 135 | 50% | 90,0 | 67,5 | 50% | 33,8 | 216 |
| 7 | 250 | 75% | 187,5 | 50% | 125,0 | 93,8 | 50% | 46,9 | 300 |
| 8 | 300 | 75% | 225 | 50% | 150,0 | 112,5 | 50% | 56,3 | 360 |
| 9 | 280 | 75% | 210 | 50% | 140,0 | 105,0 | 50% | 52,5 | 336 |
| 10 | 220 | 75% | 165 | 50% | 110,0 | 82,5 | 50% | 41,3 | 264 |
| 11 | 200 | 75% | 150 | 50% | 100,0 | 75,0 | 50% | 37,5 | 240 |
| 12 | 220 | 75% | 165 | 50% | 110,0 | 82,5 | 50% | 41,3 | 264 |
| 13 | 210 | 75% | 157,5 | 50% | 105,0 | 78,8 | 50% | 39,4 | 252 |
| 14 | 200 | 75% | 150 | 50% | 100,0 | 75,0 | 50% | 37,5 | 240 |
| 15 | 180 | 75% | 135 | 50% | 90,0 | 67,5 | 50% | 33,8 | 216 |
| 16 | 160 | 75% | 120 | 50% | 80,0 | 60,0 | 50% | 30,0 | 192 |
| 17 | 180 | 75% | 135 | 50% | 90,0 | 67,5 | 50% | 33,8 | 216 |
| 18 | 220 | 75% | 165 | 50% | 110,0 | 82,5 | 50% | 41,3 | 264 |
| 19 | 300 | 75% | 225 | 50% | 150,0 | 112,5 | 50% | 56,3 | 360 |
| 20 | 350 | 75% | 262,5 | 50% | 175,0 | 131,3 | 50% | 65,6 | 420 |
| 21 | 340 | 75% | 255 | 50% | 170,0 | 127,5 | 50% | 63,8 | 408 |
| 22 | 300 | 75% | 225 | 50% | 150,0 | 112,5 | 50% | 56,3 | 360 |
| 23 | 270 | 75% | 202,5 | 50% | 135,0 | 101,3 | 50% | 50,6 | 324 |
| 24 | 180 | 75% | 135 | 50% | 90,0 | 67,5 | 50% | 33,8 | 216 |
| TOTAL | 5280 | | | TOTAL | 2640,0 | 1980,0 | | TOTAL | 6336 |

FIG.7

| heure | charge en MES (kg MES/h) | % MVS | Charge en MVS (en kg/h) | Rendement du primaire (% d'abattement des MES) | Quantité de MES éliminée (kg/h) | Quantité de MV éliminée (kg/h) | Hypothèse rendement 50 % d'élimination des MV en digestion | Quantité de biogaz produite (Nm3) | Quantité de PCI produite (kWh) |
|---|---|---|---|---|---|---|---|---|---|
| 0 | 130 | 75% | 97,5 | 70% | 91,0 | 68,3 | 50% | 34,1 | 218,4 |
| 1 | 110 | 75% | 82,5 | 75% | 82,5 | 61,9 | 50% | 30,9 | 198 |
| 2 | 110 | 75% | 82,5 | 75% | 82,5 | 61,9 | 50% | 30,9 | 198 |
| 3 | 130 | 75% | 97,5 | 70% | 91,0 | 68,3 | 50% | 34,1 | 218,4 |
| 4 | 120 | 75% | 90 | 75% | 90,0 | 67,5 | 50% | 33,8 | 216 |
| 5 | 140 | 75% | 105 | 70% | 98,0 | 73,5 | 50% | 36,8 | 235,2 |
| 6 | 180 | 75% | 135 | 60% | 108,0 | 81,0 | 50% | 40,5 | 259,2 |
| 7 | 250 | 75% | 187,5 | 50% | 125,0 | 93,8 | 50% | 46,9 | 300 |
| 8 | 300 | 75% | 225 | 50% | 150,0 | 112,5 | 50% | 56,3 | 360 |
| 9 | 280 | 75% | 210 | 50% | 140,0 | 105,0 | 50% | 52,5 | 336 |
| 10 | 220 | 75% | 165 | 60% | 132,0 | 99,0 | 50% | 49,5 | 316,8 |
| 11 | 200 | 75% | 150 | 60% | 120,0 | 90,0 | 50% | 45,0 | 288 |
| 12 | 220 | 75% | 165 | 60% | 132,0 | 99,0 | 50% | 49,5 | 316,8 |
| 13 | 210 | 75% | 157,5 | 60% | 126,0 | 94,5 | 50% | 47,3 | 302,4 |
| 14 | 200 | 75% | 150 | 60% | 120,0 | 90,0 | 50% | 45,0 | 288 |
| 15 | 180 | 75% | 135 | 60% | 108,0 | 81,0 | 50% | 40,5 | 259,2 |
| 16 | 160 | 75% | 120 | 60% | 96,0 | 72,0 | 50% | 36,0 | 230,4 |
| 17 | 180 | 75% | 135 | 60% | 108,0 | 81,0 | 50% | 40,5 | 259,2 |
| 18 | 220 | 75% | 165 | 50% | 110,0 | 82,5 | 50% | 41,3 | 264 |
| 19 | 300 | 75% | 225 | 50% | 150,0 | 112,5 | 50% | 56,3 | 360 |
| 20 | 350 | 75% | 262,5 | 50% | 175,0 | 131,3 | 50% | 65,6 | 420 |
| 21 | 340 | 75% | 255 | 50% | 170,0 | 127,5 | 50% | 63,8 | 408 |
| 22 | 300 | 75% | 225 | 50% | 150,0 | 112,5 | 50% | 56,3 | 360 |
| 23 | 270 | 75% | 202,5 | 50% | 135,0 | 101,3 | 50% | 50,6 | 324 |
| 24 | 180 | 75% | 135 | 60% | 108,0 | 81,0 | 50% | 40,5 | 259,2 |
| | | | | TOTAL | 2998,0 | 2248,5 | | TOTAL | 7195,2 |

FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008037296 A